# EUROPÄISCHE PATENTSCHRIFT

(11) **EP 3 415 567 B1**
(45) Veröffentlichungstag und Bekanntmachung des Hinweises auf die Patenterteilung: **25.03.2020**
(21) Anmeldenummer: 17175415.3
(22) Anmeldetag: 12.06.2017
(51) Int. Cl.: C08L 75/00, F16B 13/14

(54) **BAUTEIL, VERFAHREN ZUM HERSTELLEN EINES BAUTEILS, KIT UND VERFAHREN ZUM VERBINDEN VON BAUTEILEN**
COMPONENT, METHOD FOR PRODUCING A COMPONENT, KIT AND METHOD FOR CONNECTING COMPONENTS
ÉLÉMENT STRUCTUREL, PROCÉDÉ DE FABRICATION D'UN ÉLÉMENT STRUCTUREL, KIT ET PROCÉDÉ D'ASSEMBLAGE D'ÉLÉMENT STRUCTURAUX

(43) Veröffentlichungstag der Anmeldung: 19.12.2018
(73) Patentinhaber: Nolax AG, 6203 Sempach Station (CH)
(72) Erfinder: Wolf, Thomas, 6025 Neudorf (CH); Steiner, Patrick, 6467 Schattdorf (CH); Fischer, Marcel, 6026 Rain (CH)
(74) Vertreter: Hepp Wenger Ryffel AG

(56) Entgegenhaltungen:
- DE-A1-102005 059 845
- US-A- 4 224 971

## Beschreibung

Die Erfindung betrifft ein Bauteil, ein Verfahren zum Herstellen eines Bauteils, ein Kit und ein Verfahren zum Verbinden von Bauteilen gemäss den unabhängigen Ansprüchen.

Leichtbauteile finden immer stärker den Weg in das alltägliche Leben. Leichtbauteile zeichnen sich insbesondere durch das geringe Gewicht aus und sind zudem kostengünstiger als Massivbauteile. Porenbeton wird beispielsweise häufig im Hausbau verwendet. Er zeigt eine gute Wärmedämmung und trägt damit zu geringeren Energiekosten bei. Spanplatten werden sehr häufig im Möbelbau eingesetzt oder im Innenausbau verwendet. Der vielfältige Einsatz von Spanplatten ist insbesondere auf die kostengünstige Herstellung zurückzuführen.

Diese Leichtbauteile haben jedoch wesentliche Nachteile. Ein Nachteil liegt im Anbringen von Verbindungsmitteln, wie beispielsweise Schrauben oder Bolzen. Dazu werden typischerweise Inserts, beispielsweise Dübel, verwendet, die auf das Verbindungsmittel abgestimmt sind. In einem ersten Schritt wird der Dübel in ein, meist vorgebohrtes, Loch eingebracht und durch das Einbringen des Verbindungsmittels erfolgt die Verankerung. Aufgrund des leichten und porösen Materials werden die Verbindungsmittel auf diese Art jedoch häufig nur unzureichend in dem Material verankert. Bei zu grosser Krafteinwirkung auf das Verbindungsmittel kann dieses aus seiner Verankerung gerissen werden, ein mit dem Verbindungsmittel verankertes Objekt kann sich von dem Bauteil lösen. Dies birgt ein erhebliches Sicherheitsrisiko.

In DE 10 2005 059845 sind in situ aus Befestigungsmassen herstellbare Befestigungselemente gezeigt, die nanoskalige Füllstoffe beinhalten. In US 4 224 971 ist eine Verankerungsanordnung gezeigt, die einen Stopfen aus einem Zweikomponentenkleber umfasst, der zur Aufnahme in ein Loch in einem Aufnahmematerial geeignet ist, wobei der Kleber nach dem Vermischen der beiden Komponenten aushärtbar ist. Mindestens eine Komponente des Klebers ist mikroverkapselt und in Mischung mit der zweiten Komponente.

Es ist daher eine Aufgabe der Erfindung die Nachteile des Stands der Technik zu überwinden. Insbesondere ist es eine Aufgabe der Erfindung, ein Bauteil bereitzustellen, das die Vorteile eines Leichtbauteils aufweist, aber dennoch eine optimale Verankerung von Verbindungsmitteln ermöglicht. Des Weiteren ist es insbesondere Aufgabe der Erfindung, ein automatisiertes Verfahren und/oder ein situationsbedingtes Einbringen oder Anbringen eines krafteinleitenden und/oder kraftableitenden Elements in ein solches Bauteil bereitzustellen.

Diese Aufgaben werden durch die Merkmale der unabhängigen Ansprüche gelöst.

Die Erfindung betrifft ein Bauteil umfassend einen ersten äusseren Bereich, mindestens einen Zwischenbereich und einen zweiten äusseren Bereich. Die äusseren Bereiche weisen eine höhere Dichte und/oder ein höheres Elastizitätsmodul als der mindestens eine Zwischenbereich auf. Der erste äussere Bereich und/oder der zweite äussere Bereich weist eine Öffnung, Schwächung oder Markierung auf und/oder in einer Abdeckung in einem Seitenbereich ist eine Öffnung, Schwächung oder Markierung vorgesehen. In den mindestens einen Zwischenbereich ist eine, insbesondere injizierte und vorzugsweise vernetzte, Polymerzusammensetzung eingebracht. Die Polymerzusammensetzung ist zwischen dem ersten äusseren Bereich und dem zweiten äusseren Bereich und im Wesentlichen innerhalb des mindestens einen Zwischenbereichs und/oder im Bereich der Öffnung, Schwächung oder Markierung angeordnet. Die Polymerzusammensetzung ist derart angeordnet, dass ein mechanisches Verbindungsmittel durch den ersten äusseren Bereich und/oder den zweiten äusseren Bereich und/oder die Abdeckung im Seitenbereich hindurch ragend, in der Polymerzusammensetzung fixiert oder fixierbar ist.

Das erfindungsgemässe Bauteil unterscheidet sich von bekannten Sandwichplatten darin, dass die einzelnen Bereiche graduell in einander übergehen. Im Gegensatz hierzu sind Zwischenschicht und Deckschicht bei Sandwichplatten eindeutig identifizierbar. Unter dem Seitenbereich bzw. den Seitenbereichen des Bauteils wird der Bereich bzw. die Bereiche verstanden, welche von den äusseren Bereichen und dem Zwischenbereich ausgebildet werden.

Unter Elastizitätsmodul, auch Youngscher Modul genannt, ist ein Materialkennwert, der den Zusammenhang zwischen Spannung und Dehnung bei der Verformung eines festen Körpers bei linearelastischem Verhalten beschreibt. Das Elastizitätsmodul wird in Pascal (Pa) angegeben. Das Elastizitätsmodul eines der äusseren Bereiche ist vorzugsweise mindestens 10 % höher als das Elastizitätsmodul des mindestens einen Zwischenbereichs. Besonders bevorzugt weisen der erste äussere Bereich und der zweite äussere Bereich ein Elastizitätsmodul auf, dass um mindestens 10 % höher ist als ein mittig angeordneter Bereich der Zwischenschicht. Das Bauteil ist vorzugsweise durch mindestens drei unterschiedliche Elastizitätsmodule charakterisiert, die von einem Zentrum, d.h. des mittig angeordneten Bereichs, der Zwischenschicht zu den äusseren Bereichen zunehmend angeordnet sind. Die beiden äusseren Bereiche können unterschiedliche oder identische Elastizitätsmodule aufweisen. Ähnlich kann es sich mit sich gegenüberliegenden Bereichen in der mindestens einen Zwischenschicht verhalten. Das Elastizitätsmodul kann abhängig vom Werkstofftyp mittels Zug oder Druckprüfung gemessen werden. Für Zugversuche können materialabhängig folgende Normen verwendet werden:
- Metalle: DIN EN ISO 6892-1;
- Kunststoffe: ISO 527; ASTM D 638;
- Faserverstärkte Kunststoffe: ISO 14129;
- Hartschäume: ISO 1926; ASTM D 1623;
- Fasern und Filamente: ISO 5079; ASTM D 3822.

Für Druckversuche kann die Norm ASTM D 3410 verwendet werden.

Das Elastizitätsmodul kann mit der Dichte eines Stoffes korrespondieren, kann aber unabhängig von der Dichte sein.

Als Dichte im Sinne dieser Anmeldung ist die Massendichte, d. h. die Verteilung der Masse pro Volumen zu verstehen.

Die Dichte und/oder das Elastizitätsmodul nimmt/nehmen von dem Zwischenbereich in Richtung der äusseren Bereiche graduell zu, so dass die Randbereiche der äusseren Bereiche vorzugsweise die höchste Dichte und/oder das höchste Elastizitätsmodul aufweisen.

Unter einer Abdeckung wird bevorzugt eine Platte oder eine Schiene verstanden. Die Abdeckung ist bevorzugt derart an einer Seite des erfindungsgemässen Bauteils angeordnet oder anordenbar, dass die Öffnung, Schwächung oder Markierung in einem Bereich des seitlich freiliegenden Zwischenbereichs angeordnet ist.

Unter "fixiert" wird hier und im Folgenden verstanden, dass das Verbindungsmittel in oder an die Polymerzusammensetzung eingebracht oder angebracht ist. Unter "fixierbar" wird hier und im Folgenden verstanden, dass das Verbindungsmittel einbringbar in oder anbringbar an die Polymerzusammensetzung ist.

Durch die Polymerzusammensetzung wird der Insert für ein Verbindungselement in situ erzeugt. Als Insert ist dabei zu verstehen, dass die Polymerzusammensetzung in das Bauteil aufgebracht wird. Es ist aber auch oder alternativ möglich, die Polymerzusammensetzung als sogenanntes Onsert auf das Bauteil aufzutragen. Durch die Abstimmung der Eigenschaften der Polymerzusammensetzung und der Insert- bzw. Onsert-Geometrie können die Verankerungseigenschaften der Verbindungselemente verbessert werden. Die hohe Dichte und/oder das hohe Elastizitätsmodul der äusseren Bereiche geben dem Bauteil eine hohe Festigkeit bei guter Flexibilität, so dass auf Deckplatten und Deckschichten, wie sie in Sandwichbauteilen Verwendung finden, verzichtet werden kann. Auf das Bauteil wirkende Kräfte können gut auf die äusseren Bereiche abgeleitet werden.

Auf dieses Weise wird ein Bauteil bereitgestellt, welches die Vorteile eines Leichtbauteils beibehält und gleichzeitig verschiedene mechanische Verbindungen, bspw. verschiedene Schraubentypen oder Gewindetypen, aufnehmen kann und hohen Krafteinwirkungen standhält. Zudem muss das Insert nicht wie bei handelsüblichen Metall- oder Kunststoffinserts auf eine definierte Schraube oder mechanisches Verbindungsmittel abgestimmt sein. Durch die Abstimmung der Eigenschaften der Polymerzusammensetzung und Insert-Geometrie können die physikalischen Eigenschaften des Krafteinleitungspunktes und damit des Bauteils optimiert werden. Des Weiteren können die Härte- und Elastizitätseigenschaften innerhalb eines Anschlusspunktes eingestellt werden, um so eine optimierte Krafteinleitung in die Bauteilstrukturen zu erzielen. Dies ist insbesondere bei dynamischen Lasten vorteilhaft. Des Weiteren vorteilhaft ist, dass abhängig von der Polymerzusammensetzung erhöhte Ein- und Ausdrehwiederstände (Drehmomente) gegenüber herkömmlichen Fixierungen in Metall- und Kunststoffinserts erzielt werden können. Durch die Eliminierung des Metall- oder Kunststoffinserts in dem erfindungsgemässen Bauteil kann die Anzahl der Grenzschichten und somit das Fehlerrisiko bezüglich Adhäsion und/oder Korrosion reduziert werden.

Das Bauteil kann eine Spanplatte sein. Beispielsweise ist es möglich, dass die Späne in dem äusseren Bereich eine höhere Dichte aufweisen als die Späne im Zwischenbereich. Die Späne im äusseren Bereich können feiner sein und/oder stärker zusammengepresst sein. Es ist auch möglich, dass die Späne der äusseren Bereiche mit einem Harz ummantelt sind. Durch die Wahl des Harzes können die Eigenschaften der äusseren Bereiche, beispielsweise die Elastizitätseigenschaften, verändern und der geplanten Verwendung angepasst werden.

Bei den Spanplatten kann es sich beispielsweise um folgende Spanplatten-Typen handeln:
- OSB (Oriented Strand Board)
- Faserplatten (HDF, MDF, Weichfaser-Platten)
- Röhrenspanplatte.

Solche Spanplatten lassen sind kostengünstig herstellen, zeichnen sich durch ausgezeichnete Stabilität aus und sind besonders gut belastbar und langlebig.

Vorzugsweise ist das Bauteil porös oder umfasst poröse Bereiche, insbesondere die äusseren Bereiche und/oder der Zwischenbereich.

Diese Bauteile zeichnen sich dadurch aus, dass sie bei vergleichbarer Stabilität und Flexibilität ein geringeres Gewicht als Massivbauteile aufweisen. In den Poren kann beispielsweise Luft eingeschlossen sein, dies führt zu guten Dämmungseigenschaften, insbesondere zu einer guten Wärmedämmung. Dies kann beispielsweise beim Einsatz im Bau oder Innenausbau von Häusern vorteilhaft sein.

Das Material des Bauteils ist vorzugsweise ausgewählt aus der Gruppe: Kunststoff, vorzugsweise geschäumt; mineralische Werkstoffe, vorzugsweise geschäumt; Pilzgeflechte; Metalle, vorzugsweise geschäumt; Holz.

Durch die Wahl des Materials ergeben sich viele Einsatzmöglichkeiten. Zudem können die Eigenschaften des Bauteils durch die Wahl des Materials weiter optimiert werden.

Das mechanische Verbindungsmittel kann aus der Gruppe umfassend Schraube, Gewindestange, Clip, Bolzen, Buchsen, Hülsen, Distanzhalter, Stifte, Nagel, Haken, Klammer, Feder, Nieten, Dübel, Profile, Laschen, Scharniere, Magnete, ausgewählt sein.

Das Verbindungsmittel kann vor dem Einbringen der Polymerzusammensetzung vorpositioniert und mit der Polymerzusammensetzung angespritzt oder umspritzt werden oder nach dem Verfestigen der Polymerzusammensetzung in oder an diese eingebracht oder angebracht werden.

Die Polymerzusammensetzung kann entsprechend den Formulierungen offenbart in EP 2 589 478 A1 gewählt werden. Diese werden durch Bezugnahme aufgenommen. Die Polymerzusammensetzung ist insbesondere ein Klebstoff mit den folgenden Eigenschaften. Der Klebstoff ist bevorzugt ein schnell aushärtender Zweikomponentenklebstoff auf Basis von Polyharnstoff wie in EP 1 958 975 B1 oder EP 2 871 194 beschrieben. Diese werden durch Bezugnahme aufgenommen.

Bevorzugt umfasst die Polymerzusammensetzung eine isocyanathaltige Komponente A und eine aminhaltige Komponente B. Die Komponente A enthält ein Isocyanat-terminiertes Präpolymer mit einer Isocyanat-Funktionalität von ≥ 1,7, vorzugsweise von 1,7 < f_{NCO} < 3, besonders bevorzugt im Bereich von 2 bis 3. Die Komponente B enthält wenigstens ein Di- und/oder Polyamin, vorzugsweise ein Polyetherdiamin und/oder Polyetherpolyamin. Das stöchiometrische Verhältnis von Isocyanatgruppen in Komponente A zu Amingruppen in Komponente B beträgt hierbei 0,5 bis 1,2, besonders bevorzugt 1.

Besonders bevorzugt umfasst die Polymerzusammensetzung eine erste Komponente A und eine zweite Komponente B. Die Komponente A enthält ein monomeres Polyisocyanat, insbesondere monomeres Diisocyanat, und ein isocyanat-terminiertes Präpolymer und/oder ein Präpolymergemisch mit einer Isocyanatfunktionalität ≥ 1.7, bevorzugt im Bereich von 1.7 < f_{NCO} < 3, besonders bevorzugt im Bereich von 2 < f_{NCO} < 3. Die zweite Komponente B enthält ein Di- und/oder Polyamin, insbesondere ein Polyetherdiamin und/oder ein Polyetherpolyamin; und einen Trimerisierungskatalysator. Das stöchiometrische Verhältnis von Isocyanatgruppen in der ersten Komponente A zu in der Zusammensetzung enthaltenen isocyanatreaktiven Wasserstoffatomen in der zweiten Komponente B beträgt 7.5 bis 25, bevorzugt 10 bis 20, besonders bevorzugt 15. Es wird somit ein Zwei-Komponenten-Polymerzusammensetzung verwendet, bei welcher in einem ersten Schritt über eine Reaktion des im Überschuss vorhandenen monomeren Polyisocyanats (insbesondere des Diisocyanats) mit dem Polyamin ein zweites Präpolymer gebildet wird. Diese Reaktion ist stark exotherm. Gleichzeitig erfolgt eine Vernetzung des isocyanat-terminierten Präpolymers der Komponente A durch in der Komponente B bereitgestellte Amine. Im weiteren Reaktionsverlauf kommt es unter dem Einfluss von einschlägigen Katalysatoren, insbesondere Kaliumoctoat, vorwiegend zu einer Trimerisierung der vorhandenen Isocyanatgruppen. So weist die Polymerzusammensetzung im Vergleich zu üblichen Polyurethan- und Polyurea-Klebstoffen sowohl höhere Zugfestigkeit und Wärmebeständigkeit als auch eine höhere Schlagzähigkeit auf als andere hochfeste Klebstoffe wie beispielsweise Epoxidharze.

Grundsätzlich sind auch andere zweikomponentige, zu Duromeren aushärtende, flüssige Klebstoffe auf Basis von Polyurethan, Epoxid oder Acrylat einsetzbar. Der Klebstoff wird als flüssig bezeichnet im bestimmungsgemässen Auftragszustand bei einer Viskosität von <10000 mPas, vorzugsweise <300 mPas, idealerweise <100 mPas (gemessen im Mischkopf des Applikators bei 35°C-65°C, vorzugsweise 50°C und einen Druck von 70-140 bar, vorzugsweise 100 bar). Diese Mischviskosität kann durch Anwählen der Temperatur der Komponenten weiter optimiert werden.

Das Aushärten bezeichnet in diesem Zusammenhang die chemische Verfestigung des Klebstoffes durch Polymerisation, -kondensation und -addition. Derart wird eine schnell insbesondere chemisch abbindende, strukturell belastbare Polymerzusammensetzung bereitgestellt.

Die Öffnung kann ausgewählt sein aus der Gruppe Schlitz, Bohrung, insbesondere kreisrunde Bohrung. Diese können mechanisch durch Bohren, Fräsen, Stanzen, Schlitzen, Perforieren, Lasern, Schleifen, Schneiden, chemisch oder thermisch eingebracht werden. Dabei kann eine Öffnung, mehrere Öffnungen, mehrere vergleichsweise kleine Öffnungen vorliegen, welche rund, eckig oder schlitzartig ausgestaltet sein können. Freiformen sind ebenfalls möglich. Derart kann die Polymerzusammensetzung besonders vorteilhaft in die Zwischenschicht eingebracht werden.

Durch die Wahl der Öffnung als eine nicht-runde Öffnung beispielsweise als Schlitz wird ein Anschlusspunkt bereitgestellt, der einen Formschluss als Verdrehsicherung der verfestigten Polymerzusammensetzung sicherstellt. Derart können grösserer Kräfte aufgenommen werden.

Bei der Wahl der Öffnung als kleine, schmale Öffnungen kann eine verdeckte Montage ermöglicht werden.

Die Polymerzusammensetzung kann derart ausgestaltet sein, dass die Polymerzusammensetzung eine Hinterschneidung ausbildet. Dabei ist die Hinterschneidung bevorzugt am ersten äusseren und/oder am zweiten äusseren Bereich, besonders bevorzugt am dem Zwischenbereich zugewandten Bereich des ersten äusseren Bereichs und/oder des zweiten äusseren Bereichs, ausgebildet. Somit kann eine formschlüssige Verbindung zwischen der Polymerzusammensetzung und dem ersten äusseren Bereich und/oder dem zweiten äusseren Bereich ausgebildet werden, sodass besonders starke Kräfte eingeleitet und auf die äusseren Bereiche abgeleitet werden können.

Des Weiteren kann die Polymerzusammensetzung derart ausgestaltet sein, dass es eine stoffschlüssige, d.h. adhäsive, und/oder formschlüssige und/oder kraftschlüssige Verbindung ausbildet. Die stoffschlüssige Verbindung ist bevorzugt zwischen der Polymerzusammensetzung und dem Zwischenbereich und/oder dem ersten äusseren Bereich und/oder dem zweiten äusseren Bereich ausgebildet. Auch durch diese Ausgestaltung werden besonders starke Kräfte eingeleitet und auf die äusseren Bereiche abgeleitet.

Ein weiterer Aspekt der Erfindung betrifft ein Verfahren zur Herstellung eines Bauteils, insbesondere eines Bauteils wie vorhergehend beschrieben, mit mindestens einem Insert und/oder Onsert aus einer vorzugsweise vernetzbaren Polymerzusammensetzung. Das Verfahren umfasst den Schritt Bereitstellen eines Bauteils umfassend einen erste äusseren Bereich, mindestens einen Zwischenbereich und einen zweiten äusseren Bereich. Die äusseren Bereiche weisen dabei eine höhere Dichte und/oder ein höheres Elastizitätsmodul als der mindestens eine Zwischenbereich auf. Der erste äussere Bereich und/oder der zweite äussere Bereich weist eine Öffnung, Schwächung oder Markierung auf und/oder in einer Abdeckung eines Seitenbereichs ist eine Öffnung, Schwächung oder Markierung vorgesehen.

Das Verfahren umfasst des Weiteren den Schritt des Einbringens, insbesondere Injizieren, einer vernetzbaren Polymerzusammensetzung an der Stelle der Markierung oder der Schwächung oder durch die Öffnung zwischen dem ersten äusseren Bereich und dem zweiten äusseren Bereich und im Wesentlichen innerhalb des mindestens einen Zwischenbereichs.

Ein weiterer Schritt ist das Verfestigen der Polymerzusammensetzung zwischen den Bereichen derart, dass ein mechanisches Verbindungsmittel durch den ersten äusseren Bereich und/oder den zweiten äusseren Bereich und/oder die Abdeckung des Seitenbereichs, hindurch ragend, in der Polymerzusammensetzung fixierbar ist.

Derart wird ein Verfahren bereitgestellt, mit welchem in einem schnellen Prozess Insert- und Onsertlösungen für Leichtbau-Strukturen erzielt werden, welche nicht die typische Schichtbauweise von Sandwichplatten aufweisen. Ein vordefiniertes Insert, welches bspw. eingeklebt wird, benötigt es hierbei nicht. Des Weiteren wird eine Schädigung der äusseren Bereiche minimiert und der Krafteinleitungspunkt ist im Unterschied zu herkömmlichen Lösungen nicht an den Insert- oder Onsertdurchmesser gebunden. Das Verfahren ist kosteneffizienter und erhöht die Prozesssicherheit. Standardisierte Zusatzteile müssen nicht bereitgestellt werden.

Bevorzugte Polymerzusammensetzungen sind die vorgängig beschriebenen.

Die vernetzbare Polymerzusammensetzung kann ein, insbesondere zwei-komponentiger, Klebstoff sein. Derart wird eine Polymerzusammensetzung eingebracht, die nach dem Verfestigen strukturell belastbar und insbesondere nicht expandierend ist. Eine hohe Krafteinleitung wird beispielsweise über die Gewindeschneidung des mechanischen Verbindungsmittels erzielt. Durch die exothermen Eigenschaften der Polymerzusammensetzung kann die Zwischenschicht und/oder bestehende Klebeschichten des Bauteils beim Abreagieren der Polymerzusammensetzung bereichsweise aufgeschmolzen werden. Derart wird die Verankerung der Polymerzusammensetzung verbessert; das Verarbeiten von Befestigungselement auf Plastik, beispielsweise Plastikschrauben, wird verbessert. Bevorzugte Polymerzusammensetzungen sind wie vorgängig beschrieben.

Die vernetzbare Polymerzusammensetzung kann eine Topfzeit im Bereich von 1 bis 15 sek, bevorzugt 2 bis 10 sek, besonders bevorzugt 3 bis 7 sek, aufweisen. Derart verfliesst die Polymerzusammensetzung an der Zielstelle nicht und entsprechend sind keine Positionierungshilfen beispielsweise Siebhülsen zur Positionierung der Polymerzusammensetzung notwendig. Des Weiteren kann das Bauteil umgehend weiterverarbeitet werden, da die Polymerzusammensetzung in sehr kurzer Zeit die notwendige Festigkeit aufweist, um beispielsweise eine belastbare Verbindung zu einem weiteren Bauteil mittels des Verbindungsmittels herzustellen.

Unter der Topfzeit wird gemäss DIN EN 923:1998-05 die Zeitspanne verstanden, in der ein Mehrkomponentenklebstoff nach dem Mischen verarbeitet werden kann. Die Topfzeit wurde nach dem "Verfahren 3: Bestimmung durch manuelle Auftragung" der DIN EN 14022:2010 bestimmt (Deutsche Fassung). Dabei muss selbstverständlich die schnelle Reaktionszeit des Systems berücksichtigt werden.

Das Verfahren kann des Weiteren den Schritt des Anbringens oder Einbringens eines Verbindungsmittels an bzw. in die Polymerzusammensetzung vor oder nach dem Verfestigen der Polymerzusammensetzung aufweisen. "In die Polymerzusammensetzung" heisst, dass das Verbindungsmittel an der Zielstelle vorpositioniert sein kann, sodass das Verbindungsmittel von der Polymerzusammensetzung umspritzt wird. Alternativ wird das Verbindungsmittel in die verfestigte Polymerzusammensetzung eingebracht, beispielsweise wird eine Schraube eingedreht.

Das Verbindungsmittel ist vorzugsweise ein Verbindungsmittel wie vorhergehend beschrieben.

Ein weiterer Aspekt der Erfindung betrifft ein Kit für die Herstellung eines Bauteils, insbesondere eines Bauteils wie vorhergehend beschrieben, mit mindestens einem Insert und/oder Onsert aus einer vorzugsweise vernetzten Polymerzusammensetzung. Die Polymerzusammensetzung weist eine vernetzbare, insbesondere zwei-komponentige, Polymerzusammensetzung auf.
Das Kit umfasst weiter Anwendungshinweise zur Durchführung eines Verfahrens wie vorhergehend beschrieben.

Ein weiterer Aspekt der Erfindung betrifft ein Verfahren zum Verbinden eines Bauteils, wie vorhergehend beschrieben, an ein weiteres Element umfassend den Schritt des Anbringens oder Einbringens eines Verbindungsmittels in die Polymerzusammensetzung vor oder nach dem Verfestigen der Polymerzusammensetzung.

Des Weiteren betrifft die Erfindung die Verwendung eines Bauteils, wie vorhergehend beschrieben, im Bereich Strassenbau, insbesondere Nutzfahrzeuge, PKW, Formel 1, Reisemobile, Zwei/Dreirad, temporäre Strassenbeläge; Schienenbau, insbesondere Bahn, Tram, Seilbahnen; Luftfahrtbau, insbesondere Raumfahrt, Flugzeuge, Drohnen, Satelliten; Schifffahrtsbau, insbesondere Yacht & Superyacht, Fluss-, Transport-, Kreuzfahrtschiffe; Bau, insbesondere Fassaden und Dächer, Böden, Brücken, Aufzug, Rolltreppen, mobile Behausung; Innenausbau, insbesondere Möbel, Decken, Wände, Böden, Ladenbau Messebau, Bühnenbau, Display, Türen, Trennwände; Sport, insbesondere Wintersport und Wassersport; Logistik, insbesondere Container, Tanks, Paletten, Verpackungen; Energie, insbesondere Wind-Energieanlagen, Solar-Anlagen; Maschinenbau, insbesondere Stanzwerkzeuge, Verkleidungen, bewegte Teile; Medizin, insbesondere Zahnimplantate, Implantate, Fixierungen; Wehrtechnik, insbesondere Raketen.

Nachfolgend wird die Erfindung anhand von exemplarischen Ausführungen näher beschrieben.

Es zeigen:
- Figur 1:: Schnittskizzen von erfindungsgemässen Bauteilen mit Polymerzusammensetzungen als Inserts (Varianten A bis H);
- Figur 2:: Schnittskizzen von erfindungsgemässen Bauteilen mit Polymerzusammensetzungen als Inserts (Varianten A bis C);
- Figur 3:: Varianten möglicher Öffnungen des erfindungsgemässen Bauteils;
- Figur 4:: Schnittskizzen von erfindungsgemässen Bauteils als, Eck- (A, B), T- (C) oder Endverbindungen (D);
- Figur 5:: Exothermie beim Einbringen der Polymerzusammensetzung im Vergleich zu Flüssigdübeln.

Es wird an dieser Stelle darauf hingewiesen, dass die Zeichnungen einer symbolischen Wiedergabe der Erfindung dienen.

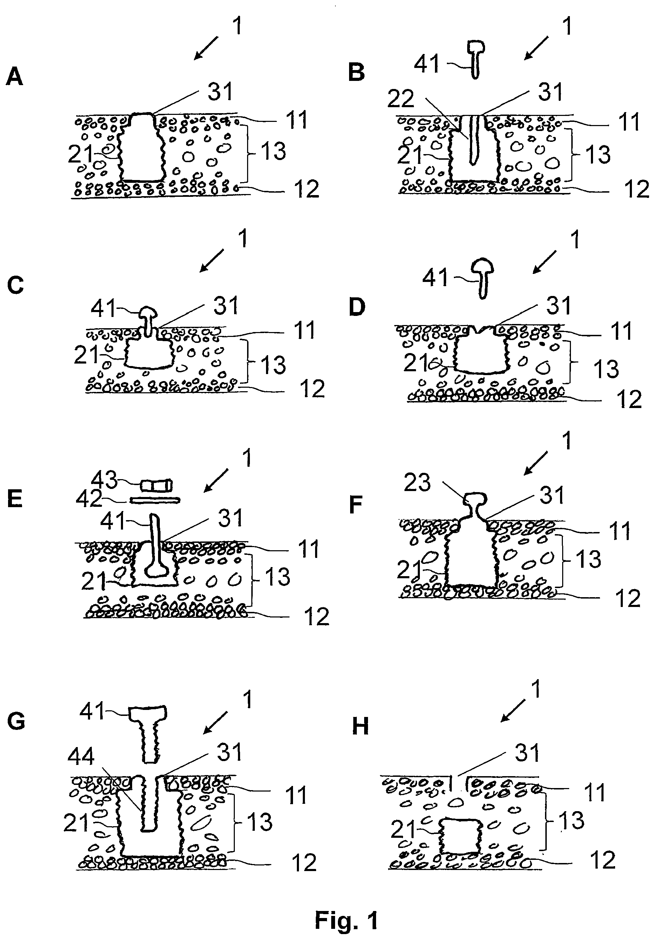

Figur 1 zeigt ein erfindungsgemässes Bauteil 1 aufweisend einen erste äusseren Bereich 11 und einen zweiten äusseren Bereich 12, welche in einen Zwischenbereich 13 übergehen. Für die nachfolgend beschriebenen Ausführungen wurde durch den ersten äusseren Bereich 11 eine Öffnung 31 gebohrt und Material des Zwischenbereichs 13 entfernt. Im Bereich einer Öffnung 31 und im Bereich des Zwischenbereichs 13 befindet sich eine vernetzte Polymerzusammensetzung 21 als Insert.

In Variante A steht die Polymerzusammensetzung 21 in Kontakt mit dem zweiten äusseren Bereich 12. In die Polymerzusammensetzung 21 kann ein Verbindungsmittel an- oder eingebracht werden, beispielsweise kann eine Schraube eingedreht werden.

In Variante B weist die Polymerzusammensetzung 21 eine Aussparung 22 auf, welche zum Einbringen eines Verbindungsmittels, hier einer Schraube 41, ausgestaltet ist.

Variante C zeigt eine Polymerzusammensetzung 21 als Insert, welche nicht in Kontakt mit dem zweiten äusseren Bereich 12 steht. Hierbei ist eine Schraube 41 in die Polymerzusammensetzung 21 eingebracht.

Variante D zeigt eine Polymerzusammensetzung 21 als Insert, welche nicht in Kontakt mit dem zweiten äusseren Bereich 12 steht, und weist eine Positionierungshilfe, hier eine Kerbe, in der Polymerzusammensetzung im Bereich der Öffnung 31 auf. Mittels der Positionierungshilfe wird eine Schraube 41 am zentralen Bereich der Polymerzusammensetzung positioniert und eingebracht.

Variante E zeigt eine Polymerzusammensetzung 21 als Insert, welche nicht in Kontakt mit dem zweiten äusseren Bereich 12 steht, und eine in der Polymerzusammensetzung vorpositionierte Schraube 41 aufweist, wobei das Gewinde der Schraube durch eine Öffnung 31 aus dem Bauteil 1 hinausragt. Die Schraube 41 wurde vor dem Einbringen der Polymerzusammensetzung 21 im Bereich des Zwischenbereichs 13 positioniert und anschliessend mit der Polymerzusammensetzung 21 umspritzt. Eine Deckplatte 42 und eine Mutter 43 können an das freiliegende Gewinde der Schraube 41 angebracht werden.

Die Varianten C, D und E sind besonders vorteilhaft zur Entkopplung von Vibrationen, akustischen und/oder thermischen Entkopplungen. Des Weiteren können Kräfte gerichtet nur auf einen der äusseren Bereiche abgeleitet werden.

In Variante F steht die Polymerzusammensetzung 21 in Kontakt mit dem zweiten äusseren Bereich 12. Die Polymerzusammensetzung 21 ragt durch die Öffnung 31 aus dem ersten äusseren Bereich 11 hinaus und weist ein Positionierungselement oder Fixierungselement 23 auf. Am Positionierungselement oder Fixierungselement 23 kann ein weiteres Element angebracht werden, welches derart ausgestaltet ist, dass es eine formschlüssige Verbindung mit Positionierungselement oder Fixierungselement 23 ausbildet. Positionierungselemente oder Fixierungselemente können Laschen, Winkel, Bolzen, Clips, Hülsen, Innengewinde, Schrauben, Stifte, Aussparungen, Vorsprünge, Schienen, Widerhaken oder Nieten sein.

In Variante G weist die Polymerzusammensetzung 21 ein Innengewinde 44 auf, welches zum Eindrehen einer Schraube 41 ausgestaltet ist.

Variante H zeigt ein Bauteil 1, wobei die Polymerzusammensetzung 21 in Kontakt mit dem zweiten äusseren Bereich 12 steht, nicht jedoch mit dem ersten äusseren Bereich 11. Dies ist besonders vorteilhaft zur Entkopplung von Vibrationen, akustischen und/oder thermischen Entkopplungen. Des Weiteren können Kräfte gerichtet nur auf einen der äusseren Bereiche abgeleitet werden.

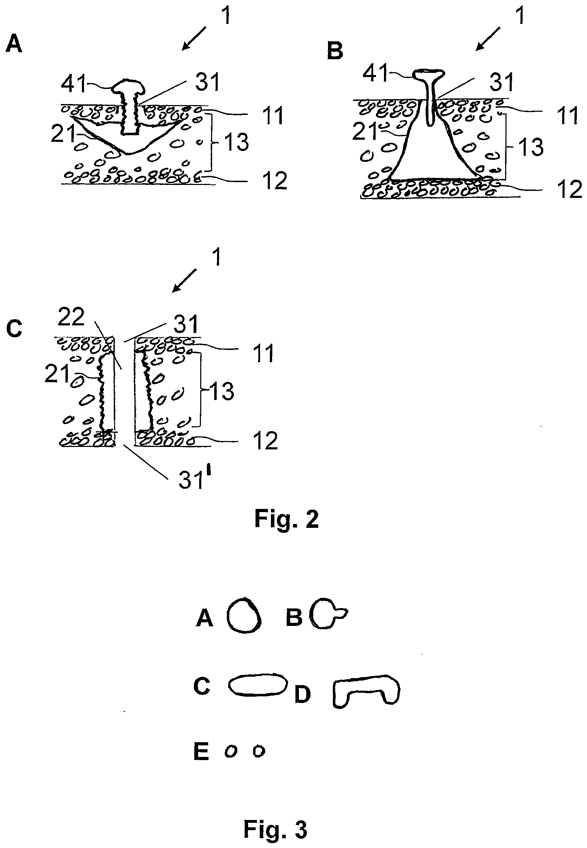

Figur 2 zeigt weitere erfindungsgemässe Bauteile 1 aufweisend einen erste äusseren Bereich 11 und einen zweite äusseren Bereich 12, wobei ein Zwischenbereich 13 zwischen den beiden äusseren Bereichen 11, 12 angeordnet ist. Der erste äussere Bereich 11 und der zweite äussere Bereich gehen graduell in den Zwischenbereich über. In Variante A weist der erste äussere Bereich 11 eine Öffnung 31 auf. Durch spezielle Hinterschnittfräsen wird Material des Zwischenbereichs entfernt und so die Form der hinterher eingebrachten Polymerzusammensetzung 21 in dem Zwischenbereich vorgegeben. Durch die Öffnung 31 wurde eine vernetzbare Polymerzusammensetzung 21 in einen Bereich des Zwischenbereichs 13 injiziert. Die Polymerzusammensetzung 21 bildet eine Hinterschneidung und steht bereichsweise in Kontakt mit der dem Zwischenbereich 13 zugewandten Teil des ersten äusseren Bereichs 11. Derart ist eine Hinterschneidung an dem ersten äusseren Bereich 11 ausgebildet. Eine Schraube 41 ist in der vernetzten Polymerzusammensetzung 21 positioniert. Derart wird eine hohe Krafteinleitung gewährleistet. Variante A ist besonders vorteilhaft zur Entkopplung von Vibrationen, akustischen und/oder thermischen Entkopplungen. Des Weiteren können Kräfte gerichtet nur auf einen der äusseren Bereiche abgeleitet werden.

In Variante B steht die Polymerzusammensetzung 21 in Kontakt mit dem zweiten äusseren Bereich 12. Dabei ist die Form der Polymerzusammensetzung 21 im verfestigten Zustand derart gewählt, dass eine verbesserte Krafteinleitung gewährleistet wird. Im Kontaktbereich zwischen der Polymerzusammensetzung 21 und dem zweiten äusseren Bereich 12 ist die Polymerzusammensetzung 21 verbreitert im Vergleich zum Bereich der Öffnung 31, so dass eine hohe Kraftableitung auf den äusseren Bereich 12 möglich ist.

In Variante C steht die Polymerzusammensetzung 21 in Kontakt mit dem ersten äusseren Bereich 11 und dem zweiten äusseren Bereich 12. In dem ersten äusseren Bereich 11 befindet sich eine Öffnung 31. In dem zweiten äusseren Bereich 12 befindet sich eine Öffnung 31'. Die Polymerzusammensetzung 21 dient auch als Distanzhalter der beiden äusseren Bereiche 11, 12 bei lokalem Druck senkrecht zu den Bereichen. Die Polymerzusammensetzung 21 weist eine Aussparung 22 auf, die sich von der Öffnung 31 zur Öffnung 31' erstreckt. Derart kann ein Verbindungsmittel, beispielsweise ein Stift, durch die Öffnungen 31, 31' geführt und positioniert werden. Derart können krafteinleitende Verbindungen über den ersten äusseren Bereich 11 und den zweiten äusseren Bereich 12 ausgestaltet werden.

Figur 3 zeigt Öffnungen eines erfindungsgemässen Bauteils (vgl. 31 in Figuren 1 und 2). Die Öffnung kann kreisrund (Variante A), kreisrund mit mindestens einer Kerbe (Variante B), als gerader Schlitz (Variante C), als einseitig gekrümmter Schlitz oder zweiseitig gekrümmter Schlitz (Variante D) ausgestaltet sein. Ebenso kann die Öffnung mehrere, vorzugsweise zwei, kreisrunde Öffnungen zum Einbringen der Polymerzusammensetzung des erfindungsgemässen Bauteils aufweisen (Variante E). In den Varianten B bis E sorgen die Öffnungen für eine Verdrehsicherung der Polymerzusammensetzung (vgl. 21 in Figuren 1 und 2) im Bauteil (vgl. 1 in Figuren 1 und 2), sofern die Polymerzusammensetzung im Bereich der Öffnung angeordnet ist.

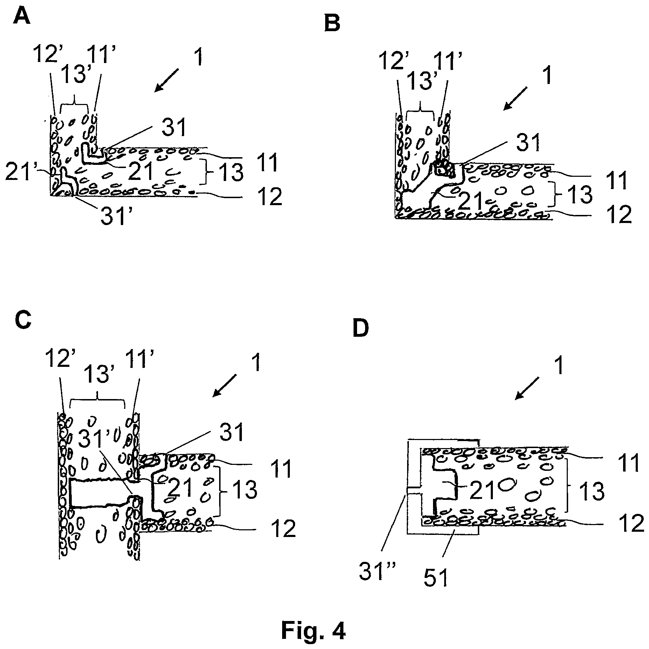

Figur 4 zeigt erfindungsgemässe Bauteile mit Eck- (Varianten A, B), T- (Variante C) oder Endverbindungen (Variante D).

Variante A zeigt ein Bauteil 1 mit einem ersten Bauteil und einem zweiten Bauteil. Das erste Bauteil wird von einem ersten äusseren Bereich 11 und einem zweiten äusseren Bereich 12 gebildet, wobei die äusseren Bereiche 11 und 12 graduell in einen Zwischenbereich 13 übergehen. Der erste äussere Bereich 11 weist eine Öffnung 31 auf. Der zweite äussere Bereich 12 weist eine Öffnung 31' auf. Das zweite Bauteil wird von einem ersten äusseren Bereich 11' und einem zweiten äusseren Bereich 12' gebildet, wobei die äusseren Bereiche 11' und 12' graduell in einen Zwischenbereich 13' übergehen. Das erste Bauteil und das zweite Bauteil bilden eine Eckverbindung aus, wobei der erste äussere Bereich 11 mit dem ersten äusseren Bereich 11', der zweite äussere Bereich 12 mit dem zweiten äusseren Bereich 12' und der Zwischenbereich 13 mit dem Zwischenbereich 13' in Kontakt stehen.

Durch die Öffnungen 31 wurde eine erste Polymerzusammensetzung 21 in einen Bereich des Zwischenbereichs 13 und einen Bereich des Zwischenbereichs 13' injiziert, wobei die Polymerzusammensetzung 21 in Kontakt mit den den Zwischenbereichen 13 und 13' zugewandten Bereichen der äusseren Bereiche 11 und 11' steht. Durch die Öffnung 31' wurde gleichermassen eine zweite Polymerzusammensetzung 21' in einen Bereich des Zwischenbereichs 13 und einen Bereich des Zwischenbereichs 13' injiziert, wobei die Polymerzusammensetzung 21 in Kontakt mit den den Zwischenbereichen 13 und 13' zugewandten Bereichen der äusseren Bereiche 12 und 12' steht. Bevorzugt weisen die erste Polymerzusammensetzung 21 und die zweite Polymerzusammensetzung 21' die gleiche chemische Zusammensetzung auf. Derart wird auf besonders einfache Art und Weise eine Eckverbindung zwischen zwei Bauteilen ausgebildet.

Die vorgängig erläuterten Vorteile für Bauteile gelten hier gleichermassen.

Variante B unterscheidet sich dadurch von Variante A, dass eine einzige Öffnung 31 in dem ersten äusseren Bereich 11 ausgebildet ist, durch welche eine Polymerzusammensetzung 21 injiziert wird. Hierbei steht die Polymerzusammensetzung 21 in Kontakt mit der den Zwischenbereichen 13 und 13' zugewandten Bereichen der äusseren Bereiche 11, 11', 12, 12'. Die Polymerzusammensetzung 21 bildet eine Strebe zwischen den äusseren Bereichen im Bereich der Eckverbindung. Derart wird auf besonders einfache Art und Weise eine Eckverbindung zwischen zwei Bauteilen ausgebildet. Die vorgängig erläuterten Vorteile für Bauteile gelten hier gleichermassen.

Variante C zeigt eine T-Verbindung eines ersten Bauteils und eines zweiten Bauteils. Das erste Bauteil ist wie für Variante B beschrieben ausgestaltet. Das zweite Bauteil weist in dem ersten äusseren Bereich 11' eine Öffnung 31' auf. Das erste und das zweite Bauteil sind in einem Winkel von im Wesentlichen 90° angeordnet. Die Öffnung 31' des zweiten Bauteils ist im Bereich des Zwischenbereichs 13 des ersten Bauteils angeordnet. Andere Winkel sind anwendungsspezifisch ebenfalls möglich. Durch die Öffnung 31 wird eine Polymerzusammensetzung 21 in einen Bereich des Zwischenbereichs 13 und in einen Bereich 13' injiziert. Hierbei gelangt die Polymerzusammensetzung 21 anteilig durch die Öffnung 31' in den Zwischenbereich 13'. Die Polymerzusammensetzung 21 verbindet die äusseren Bereiche 11, 12, 11' und 12'. Derart wird eine T-Verbindung zweier Bauteile auf einfache Art und Weise ausgebildet. Die vorgängig erläuterten Vorteile für Bauteile gelten hier gleichermassen.

Variante D zeigt ein Bauteil 1 aufweisend einen ersten äusseren Bereich 11 und einen zweiten äusseren Bereich 12, wobei die äusseren Bereiche 11, 12 graduell in einen Zwischenbereich 13 übergehen. In einem Endbereich der äusseren Bereiche 11 und 12 ist eine Abdeckung als Schiene 51 angeordnet, welche in Kontakt mit den von dem Zwischenbereich 13 wegweisenden Bereichen der äusseren Bereiche 11 und 12 und dem Teil des Zwischenbereich 13 steht, der nicht in Kontakt mit den äusseren Bereichen 11, 12 steht. Die Schiene 51 weist eine Öffnung 31" auf, welche in dem vorstehend genannten Bereich des Zwischenbereichs 13 angeordnet ist. Durch die Öffnung 31" wurde eine Polymerzusammensetzung 21 in den Endbereich des Zwischenbereichs 13 injiziert. Die Polymerzusammensetzung steht in Kontakt mit Oberflächen der äusseren Bereiche 11 und 12, welche dem Zwischenbereich 13 zugewandt sind.

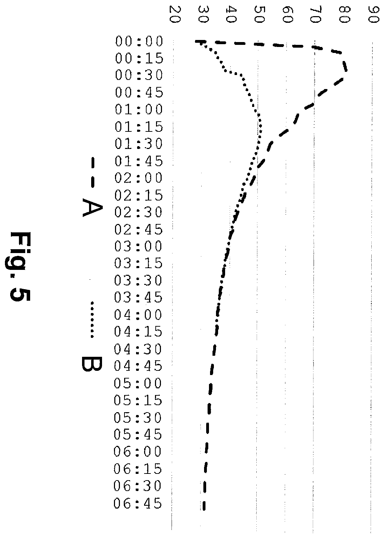

Figur 5 zeigt den Kurvenverlauf der Temperaturen einer erfindungsgemässen Polymerzusammensetzung (A) und eines handelsüblichen Flüssigdübels (B) gemessen im Kern. Auf der X-Achse ist die Zeit in min:sek und auf der Y-Achse die Temperatur in °C aufgetragen. Für den Vergleich wurde eine zweiteilige Form aus Polyethylen hergestellt. Die Form weist eine kreisrunde Bohrung mit 10 mm Durchmesser und 15 mm Tiefe auf. Die Polymerzusammensetzungen wurden bei Raumtemperatur mittels Kartuschen eingebracht und der Temperaturverlauf mit einem Temperaturfühler gemessen und aufgezeichnet. Die Temperaturmessung erfolgte in 4 mm Tiefe.

Der Temperaturverlauf ist für beide Systeme exotherm, wobei die erfindungsgemässe Polymerzusammensetzung (A, Kern 3058_1) eine deutlich höher Kerntemperatur mit 80 °C im Vergleich zur Vergleichszusammensetzung des Flüssigdübels (B) mit einer Kerntemperatur von 50 °C aufweist. Diese wird zudem schneller, d.h. innerhalb von 15 sek erreicht. Die Vergleichszusammensetzung erreicht die höchste Kerntemperatur nach ca. 1 min 15 sek.

Mit der erfindungsgemässen Polymerzusammensetzung in einem Bauteil wird damit eine bessere Verankerung, beispielsweise durch ein Anschmelzen bzw. Aufschmelzen des Zwischenbereichs aus Thermoplasten, bspw. von Bauteilen mit einem Zwischenbereich aus Polystyrol erreicht. Des Weiteren können derart bspw. Plastikschrauben verbessert in der eingebrachten Polymerzusammensetzung verankert werden.

## Patentansprüche

1. Bauteil (1) umfassend
- einen ersten äusseren Bereich (11), mindestens einen Zwischenbereich (13) und einen zweiten äusseren Bereich (12) wobei die äusseren Bereiche (11, 12) eine höhere Dichte und/oder ein höheres Elastizitätsmodul als der mindestens eine Zwischenbereich (13) aufweisen und wobei der erste äussere Bereich (11) und/oder der zweite äussere Bereich (12) eine Öffnung (31), Schwächung oder Markierung aufweist und/oder in einer Abdeckung (51) in einem Seitenbereich eine Öffnung (31), Schwächung oder Markierung vorgesehen ist,
- eine in den mindestens einen Zwischenbereich (13) eingebrachte, insbesondere injizierte und vorzugsweise vernetzte, Polymerzusammensetzung (21), die zwischen dem ersten äusseren Bereich (11) und dem zweiten äusseren Bereich (12) und im Wesentlichen innerhalb des mindestens einen Zwischenbereichs (13) und/oder im Bereich der Öffnung (31), Schwächung oder Markierung angeordnet ist,
derart, dass ein mechanisches Verbindungsmittel (41) durch den ersten äusseren Bereich (11) und/oder den zweiten äusseren Bereich (12) und/oder die Abdeckung (51) im Seitenbereich hindurch ragend, in der Polymerzusammensetzung (21) fixiert oder fixierbar ist.

2. Bauteil (1) gemäss Anspruch 1, wobei das Bauteil (1) eine Spanplatte ist.

3. Bauteil (1) gemäss Anspruch 1, wobei das Bauteil (1) porös ist oder poröse Bereiche, insbesondere die äusseren Bereiche (11, 12) und/oder der Zwischenbereich (13), umfasst.

4. Bauteil (1) gemäss Anspruch 1 oder 3, wobei ein Material des Bauteils (1) ausgewählt ist aus der Gruppe: Kunststoff, vorzugsweise geschäumt; mineralische Werkstoffe, vorzugsweise geschäumt; Pilzgeflechte; Metalle, vorzugsweise geschäumt; Holz.

5. Bauteil (1) nach einem der vorherigen Ansprüche, wobei das mechanische Verbindungsmittel (41) ausgewählt ist aus der Gruppe umfassend Schraube, Gewindestange, Clip, Bolzen, Buchsen, Hülsen, Distanzhalter, Stifte, Nagel, Haken, Klammer, Feder, Nieten, Dübel, Profile, Laschen, Scharniere, Magnete.

6. Bauteil (1) nach einem der vorherigen Ansprüche, wobei die Polymerzusammensetzung (21) eine isocyanathaltige Komponente A und eine aminhaltige Komponente B umfasst, wobei
- die Komponente A ein Isocyanat-terminiertes Präpolymer mit einer Isocyanat-Funktionalität von ≥ 1,7, vorzugsweise von 1,7 < f_{NCO} < 3, besonders bevorzugt im Bereich von 2 bis 3, enthält; und
- die Komponente B wenigstens ein Di- und/oder Polyamin, vorzugsweise ein Polyetherdiamin und/oder Polyetherpolyamin enthält, und
wobei das stöchiometrische Verhältnis von Isocyanatgruppen in Komponente A zu Amingruppen in Komponente B 0,5 bis 1,2, besonders bevorzugt 1 beträgt.

7. Bauteil (1) nach einem der vorherigen Ansprüche wobei die Polymerzusammensetzung (21) derart ausgestaltet ist, dass die Polymerzusammensetzung (21) eine Hinterschneidung ausbildet.

8. Bauteil (1) nach einem der vorherigen Ansprüche, wobei die Polymerzusammensetzung (21) derart ausgestaltet ist, dass die Polymerzusammensetzung (21) eine stoffschlüssige und/oder formschlüssige und/oder kraftschlüssige Verbindung ausbildet.

9. Verfahren zur Herstellung eines Bauteils (1), insbesondere nach einem der Ansprüche 1 bis 8, mit mindestens einem Insert und/oder Onsert aus einer vorzugsweise vernetzbaren Polymerzusammensetzung (21) umfassend die Schritte
- Bereitstellen eines Bauteils (1) umfassend einen erste äusseren Bereich (11), mindestens einen Zwischenbereich (13) und einen zweiten äusseren Bereich (12), wobei die äusseren Bereiche (11, 12) eine höhere Dichte und/oder ein höheres Elastizitätsmodul als der mindestens eine Zwischenbereich (13) aufweisen und wobei der erste äussere Bereich (11) und/oder der zweite äussere Bereich (12) eine Öffnung (31), Schwächung oder Markierung aufweist und/oder in einer Abdeckung (51) in einem Seitenbereich, eine Öffnung (31), Schwächung oder Markierung vorgesehen ist,
- Einbringen, insbesondere Injizieren, einer vernetzbaren Polymerzusammensetzung (21) an der Stelle der Markierung oder der Schwächung oder durch die Öffnung (31) zwischen dem ersten äusseren Bereich (11) und dem zweiten äusseren Bereich (12) und im Wesentlichen innerhalb des mindestens einen Zwischenbereichs (13),
- Verfestigen der Polymerzusammensetzung (21) zwischen den Bereichen derart, dass ein mechanisches Verbindungsmittel (41) durch den ersten äusseren Bereich (11) und/oder den zweiten äusseren Bereich (12) und/oder der Abdeckung des Seitenbereichs, hindurch ragend, in der Polymerzusammensetzung (21) fixierbar ist.

10. Verfahren nach Anspruch 9, wobei die vernetzbare Polymerzusammensetzung (21) ein, insbesondere zwei-komponentiger, Klebstoff ist.

11. Verfahren nach Anspruch 9 oder 10, wobei die vernetzbare Polymerzusammensetzung (21) eine Topfzeit im Bereich von 1 bis 15 sek, bevorzugt 2 bis 10 sek, besonders bevorzugt 3 bis 7 sek, aufweist.

12. Verfahren nach einem der Ansprüche 9 bis 11 umfassend den Schritt des Anbringens oder Einbringens eines Verbindungsmittels (41) an bzw. in die Polymerzusammensetzung (21) vor oder nach dem Verfestigen der Polymerzusammensetzung (21).

13. Kit für die Herstellung eines Bauteils (1) gemäss einem der Ansprüche 1 bis 8 mit mindestens einem Insert und/oder Onsert aus einer vorzugsweise vernetzten Polymerzusammensetzung (21) aufweisend
- eine vernetzbare, insbesondere zwei-komponentige, Polymerzusammensetzung (21),
- Anwendungshinweise zur Durchführung eines Verfahrens gemäss einem der Ansprüche 9 bis 12.

14. Verfahren nach Anspruch 9, zusätzlich umfassend den Schritt Verbinden des Bauteils (1) an ein weiteres Element umfassend den Schritt des Anbringens oder Einbringens eines Verbindungsmittels (41) in die Polymerzusammensetzung (21) vor oder nach dem Verfestigen der Polymerzusammensetzung (21).

15. Verwendung eines Bauteils (1) nach einem der Ansprüche 1 bis 8 im Bereich Strassen-, Schienen-, Luftfahrt- und Schifffahrtsbau, Bau, Innenausbau, Sport, Logistik, Energie, Maschinenbau, Medizin, Wehrtechnik.

## Claims

1. Component (1) comprising
- a first exterior region (11), at least one intermediate region (13) and one second exterior region (12), where the exterior regions (11, 12) have higher density and/or higher modulus of elasticity than the at least one intermediate region (13), and where the first exterior region (11) and/or the second exterior region (12) has/have an aperture (31), weakened region or marking, and/or there is an aperture (31), weakened region or marking provided in a covering (51) in a lateral region,
- a polymer composition (21) which is arranged between the first exterior region (11) and the second exterior region (12) and in essence within the at least one intermediate region (13) and/or in the region of the aperture (31), weakened area or marking and which has been introduced, in particular injected, into the at least one intermediate region (13), and has preferably been crosslinked,
so that a mechanical connection means (41) can be fixed or has been fixed in the polymer composition (21) projecting through the first exterior region (11) and/or the second exterior region (12) and/or the covering (51) in the lateral region.

2. Component (1) according to Claim 1, where the component (1) is a particle board.

3. Component (1) according to Claim 1, where the component (1) is porous or comprises porous regions, in particular the exterior regions (11, 12) and/or the intermediate region (13).

4. Component (1) according to Claim 1 or 3, where a material of the component (1) is selected from the group: plastic, preferably foamed; mineral materials, preferably foamed; fungal mycelia; metals, preferably foamed; wood.

5. Component (1) according to any of the preceding claims, where the mechanical connection means (41) is selected from the group comprising screw or threaded bolt, threaded rod, clip, bolts, bushes, sleeves, spacers, pins, nails, hooks, clamps, spring, rivets, anchors, profiles, lugs, hinges, magnets.

6. Component (1) according to any of the preceding claims, where the polymer composition (21) comprises an isocyanate-containing component A and an amine-containing component B, where
- component A comprises an isocyanate-terminated prepolymer with isocyanate functionality ≥ 1.7, preferably where 1.7 < f_{NCO} < 3, particularly preferably in the range 2 to 3; and
- component B comprises at least one di- and/or polyamine, preferably a polyetherdiamine and/or polyether polyamine, and
where the stoichiometric ratio of isocyanate groups in component A to amine groups in component B is 0.5 to 1.2, particularly preferably 1.

7. Component (1) according to any of the preceding claims, where the polymer composition (21) is designed so that the polymer composition (21) forms an undercut.

8. Component (1) according to any of the preceding claims, where the polymer composition (21) is designed so that the polymer composition (21) forms a coherent and/or interlocking and/or frictional connection.

9. Process for the production of a component (1), in particular according to any of Claims 1 to 8, with at least one insert and/or onsert made of a preferably crosslinkable polymer composition (21), comprising the steps of:
- provision of a component (1) comprising a first exterior region (11), at least one intermediate region (13) and one second exterior region (12), where the exterior regions (11, 12) have higher density and/or higher modulus of elasticity than the at least one intermediate region (13), and where the first exterior region (11) and/or the second exterior region (12) has/have an aperture (31), weakened region or marking, and/or there is an aperture (31), weakened region or marking provided in a covering (51) in a lateral region,
- introduction, in particular injection, of a crosslinkable polymer composition (21) at the location of the marking or of the weakened region, or through the aperture (31) between the first exterior region (11) and the second exterior region (12) and in essence within the at least one intermediate region (13),
- hardening of the polymer composition (21) between the regions so that a mechanical connection means (41) projecting through the first exterior region (11) and/or through the second exterior region (12) and/or through the covering of the lateral region can be fixed in the polymer composition (21).

10. Process according to Claim 9, where the crosslinkable polymer composition (21) is an adhesive, in particular a two-component adhesive.

11. Process according to Claim 9 or 10, where the pot life of the crosslinkable polymer composition (21) is in the range of 1 to 15 sec, preferably 2 to 10 sec, particularly preferably 3 to 7 sec.

12. Process according to any of Claims 9 to 11 comprising the step of application or introduction of a connection means (41) onto or into the polymer composition (21) before or after hardening of the polymer composition (21).

13. Kit for the production of a component (1) according to any of Claims 1 to 8, with at least one insert and/or onsert made of a preferably crosslinked polymer composition (21) comprising
- a crosslinkable, in particular two-component, polymer composition (21),
- instructions for carrying out a process according to any of Claims 9 to 12.

14. Process according to Claim 9, additionally comprising the step of connection of the component (1) to another element, comprising the step of application or introduction of a connection means (41) into the polymer composition (21) before or after hardening of the polymer composition (21).

15. Use of a component (1) according to any of Claims 1 to 8 in the field of road construction, railroad construction, construction for the airline industry and marine construction, general construction, fitting-out of interiors, sports, logistics, energy, mechanical engineering, medicine and defense technology.

## Revendications

1. Élément structural (1) comprenant
- une première zone externe (11), au moins une zone intermédiaire (13) et une deuxième zone externe (12), les zones externes (11, 12) possédant une densité supérieure et/ou un module d'élasticité plus élevé que l'au moins une zone intermédiaire (13) et la première zone externe (11) et/ou la deuxième zone externe (12) possédant une ouverture (31), un affaiblissement ou un marquage et/ou une ouverture (31), un affaiblissement ou un marquage se trouvant dans un recouvrement (51) dans une zone latérale,
- une composition polymère (21) incorporée, notamment injectée et de préférence réticulée dans l'au moins une zone intermédiaire (13), qui est disposée entre la première zone externe (11) et la deuxième zone externe (12) et sensiblement à l'intérieur de l'au moins une zone intermédiaire (13) et/ou dans la zone de l'ouverture (31), de l'affaiblissement ou du marquage, de telle sorte qu'un moyen de liaison mécanique (41) est calé ou peut être calé dans la composition polymère (21) de manière à faire saillie à travers la première zone externe (11) et/ou la deuxième zone externe (12) et/ou le recouvrement (51) dans la zone latérale.

2. Élément structural (1) selon la revendication 1, l'élément structural (1) étant une plaque de serrage.

3. Élément structural (1) selon la revendication 1, l'élément structural (1) étant poreux ou comportant des zones poreuses, notamment les zones externes (11, 12) et/ou la zone intermédiaire (13).

4. Élément structural (1) selon la revendication 1 ou 3, un matériau de l'élément structural (1) étant choisi dans le groupe : matière plastique, de préférence expansée ; matériaux minéraux, de préférence expansés ; réseaux mycéliens ; métaux , de préférence expansés ; bois.

5. Élément structural (1) selon l'une des revendications précédentes, le moyen de liaison mécanique (41) étant choisi dans le groupe comprenant les éléments suivants : vis, tige filetée, attache, boulon, douilles, manchons, entretoise, pointes, clous, crochets, agrafes, ressorts, rivets, chevilles, profilés, pattes, charnières, aimants.

6. Élément structural (1) selon l'une des revendications précédentes, la composition polymère (21) comprenant une composante A contenant de l'isocyanate et une composante B contenant de l'amine,
- la composante A contenant un prépolymère terminé à l'isocyanate ayant une fonctionnalité isocyanate ≥ 1,7, de préférence de 1,7 < f_{Nco} < 3, notamment de préférence dans la plage de 2 à 3 ; et
- la composante B contenant au moins une di- et/ou polyamine, de préférence une polyétherdiamine et/ou une polyétherpolyamine, et
le rapport stœchiométrique entre les groupes isocyanates dans la composante A et les groupes amines dans la composante B étant de 0,5 à 1,2, notamment de préférence égal à 1.

7. Élément structural (1) selon l'une des revendications précédentes, la composition polymère (21) étant configurée de telle sorte que la composition polymère (21) forme une contre-dépouille.

8. Élément structural (1) selon l'une des revendications précédentes, la composition polymère (21) étant configurée de telle sorte que la composition polymère (21) forme une liaison par adhérance et/ou par complémentarité de formes et/ou par assemblage de force.

9. Procédé de fabrication d'un élément structural (1), notamment selon l'une des revendications 1 à 8, comprenant au moins un insert et/ou un Onsert en une composition polymère (21) de préférence réticulable, comprenant les étapes suivantes
- fourniture d'un élément structural (1) comprenant une première zone externe (11), au moins une zone intermédiaire (13) et une deuxième zone externe (12), les zones externes (11, 12) possédant une densité supérieure et/ou un module d'élasticité plus élevé que l'au moins une zone intermédiaire (13) et la première zone externe (11) et/ou la deuxième zone externe (12) possédant une ouverture (31), un affaiblissement ou un marquage et/ou une ouverture (31), un affaiblissement ou un marquage se trouvant dans un recouvrement (51) dans une zone latérale,
- incorporation, notamment injection, d'une composition polymère (21) réticulable à l'endroit du marquage ou de l'affaiblissement ou à travers l'ouverture (31) entre la première zone externe (11) et la deuxième zone externe (12) et sensiblement à l'intérieur de l'au moins une zone intermédiaire (13),
- durcissement de la composition polymère (21) entre les zones de telle sorte qu'un moyen de liaison mécanique (41) peut être calé dans la composition polymère (21) de manière à faire saillie à travers la première zone externe (11) et/ou la deuxième zone externe (12) et/ou le recouvrement de la zone latérale.

10. Procédé selon la revendication 9, la composition polymère (21) réticulable étant un adhésif, notamment à deux composantes.

11. Procédé selon la revendication 9 ou 10, la composition polymère (21) réticulable possédant une durée de vie en pot dans la plage de 1 à 15 secondes, de préférence de 2 à 10 secondes, notamment de préférence de 3 à 7 secondes.

12. Procédé selon l'une des revendications 9 à 11, comprenant l'étape d'application ou d'incorporation d'un moyen de liaison (41) sur ou dans la composition polymère (21) avant ou après le durcissement de la composition polymère (21).

13. Kit pour la fabrication d'un élément structural (1) selon l'une des revendications 1 à 8 comprenant au moins un insert et/ou un Onsert en une composition polymère (21) de préférence réticulable, possédant
- une composition polymère (21) réticulable, notamment à deux composantes,
- des consignes d'utilisation pour mettre en œuvre un procédé selon l'une des revendications 9 à 12.

14. Procédé selon la revendication 9, comprenant en outre l'étape d'assemblage de l'élément structural (1) avec un élément supplémentaire, comprenant l'étape d'application ou d'incorporation d'un moyen de liaison (41) dans la composition polymère (21) avant ou après le durcissement de la composition polymère (21).

15. Utilisation d'un élément structural (1) selon l'une des revendications 1 à 8 dans le secteur de la construction de routes, de voies ferrées, aéronautique et naval, le bâtiment, l'aménagement d'intérieur, le sport, la logistique, l'énergie, la construction de machines, le médical, le génie militaire.
